# EUROPÄISCHE PATENTSCHRIFT

(11) **EP 0 058 866 B1**
(45) Veröffentlichungstag und Bekanntmachung des Hinweises auf die Patenterteilung: **18.07.1984**
(21) Anmeldenummer: 82100898.4
(22) Anmeldetag: 08.02.1982
(51) Int. Cl.: C09B 29/01, C09B 29/52, C09B 35/03, C08K 5/23

(54) **Anthrachinonazoverbindungen, Verfahren zu ihrer Herstellung sowie ihre Verwendung**
Anthraquinone-azo compounds, their preparation and use
Composés anthraquinone-azoiques, leur préparation et leur utilisation

(30) Priorität: 20.02.1981 DE 3106358
(43) Veröffentlichungstag der Anmeldung: 01.09.1982
(73) Patentinhaber: BAYER AG, 51368 Leverkusen (DE)
(72) Erfinder: Rolf, Meinhard, Dr., D-5090 Leverkusen 1 (DE); Neeff, Rütger, Dr., D-5090 Leverkusen 1 (DE); Müller, Walter, D-5090 Leverkusen 3 (DE)

## Beschreibung

Die Erfindung betrifft Anthrachinonazoverbindungen, die in einer ihrer tautomeren Strukturen der Formel 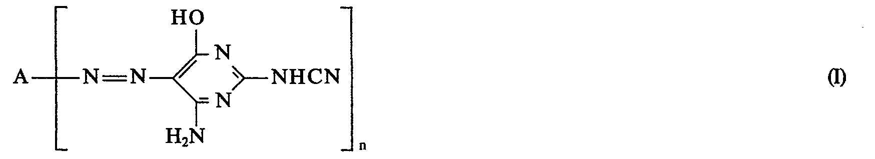 entsprechen, Verfahren zu ihrer Herstellung sowie ihre Verwendung als Pigmente.

Die Verbindungen der Formel (I) können in mehreren tautomeren Formen vorliegen, von denen im folgenden jeweils nur die in Formel (I) dargestellte Struktur genannt werden wird. Dies bedeutet aber keine Einschränkung der Erfindung bezüglich eines bestimmten Tautomeren.

In der Formel (1) bedeuten
A einen von Sulfonsäuregruppen freien, gegebenenfalls substituierten Anthrachinonrest oder einen gegebenenfalls substituierten heterocyclischen Anthrachinonrest, der vorzugsweise aus höchstens 5 kondensierten Ringen besteht, wobei die genannten Anthrachinonreste frei von Sulfonsäuregruppen sind, und
n 1 oder 2.
A bezeichnet vorzugsweise einen Anthrachinon-, Anthrapyridon-, Anthrapyrimidin-, Pyrazolanthron-, Phthaloylacridon-, Phthaloylbenzimidazol- oder Isothiazolanthron-Rest, wobei die genannten Reste substituiert sein können. Als Substituenten der heterocyclischen Reste seien beispielhaft Phenyl, Amino, Halogen, insbesondere Chlor und Brom, und Cᵢ-C₄-Alkyl, insbesondere Methyl, genannt.

Azopigmente aus Cyaniminobarbitursäure-Kupplungskomponenten sind bereits in der DE-AS 2 351 294 beschrieben. Überraschenderweise wurde nun gefunden, daß die Anthrachinonazo-Pigmente der Formel (1) bei hoher Farbstärke ausgezeichnete Echtheiten, insbesondere Licht- und Wetterechtheiten besitzen und daher eine Bereicherung der Technik darstellen.

Zur Herstellung derAnthrachinon-Derivate (I) werden Aminoanthrachinone der Formel 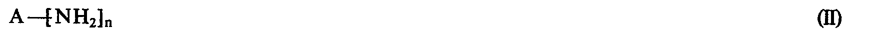 in der A und n die oben angegebene Bedeutung besitzen, diazotiert und mit n Mol der Kupplungskomponente der Formel 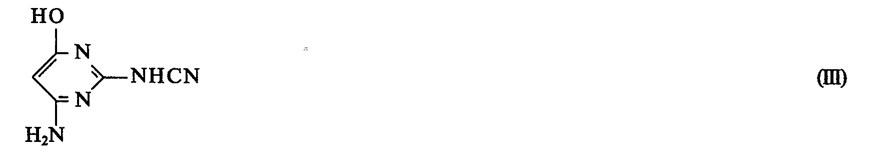 umgesetzt.

Geeignete Aminoanthrachinone der Formel (11) sind z. B.:
1-Aminoanthrachinon, 1-Amino-2-chloranthrachinon, 1-Amino-4-chloranthrachinon,
1-Amino-5-chloranthrachinon, 1-Amino-6-chloranthrachinon, 1-Amino-6-(7)-chloranthrachinon
(Gemisch), 1-Amino-5.8-dichloranthrachinon, 1-Amino-2-bromanthrachinon,
1-Amino-2.4-dibromanthrachinon, 1-Amino-6.7-dichloranthrachinon,
1-Amino-6-fluoranthrachinon, 1-Amino-7-fluoranthrachinon, 1-Amino-6.7-difluoranthrachinon,
1-Amino-4-nitroanthrachinon, 1-Amino-5-nitroanthrachinon, 1-Amino-2-methylanthrachinon,
1 -Amino-2-methyl-4-chloranthrachinon, 1-Amino-2-methyl-4-bromanthrachinon,
1-Aminoanthrachinon-2-carbonsäure, 1-Aminoanthrachinon-2-carbonsäureamid,
1-Aminoanthrachinon-2-carbonsäuremethylester, 1-Amino-4-nitroanthrachinon-2-carbonsäure,
1-Amino-2-acetylanthrachinon, 1-Amino-5-benzoylaminoanthrachinon,
1-Amino-4-benzoylaminoanthrachinon, 1-Amino-8-benzoylaminoanthrachinon,
1-Amino-5-(2-chlorbenzoylamino)-anthrachinon, 1-Amino-5-(3-chlorbenzoylamino)-anthrachinon,
1-Amino-5-(4-chlorbenzoylamino)-anthrachinon,
1-Amino-5-(2.5-dichlorbenzoylamino)-anthrachinon,
1-Amino-5-(3-nitrobenzoylamino)-anthrachinon, 1-Amino-4-(2-chlorbenzoylamino)-anthrachinon,
1-Amino-4-(3-chlorbenzoylamino)-anthrachinon, 1-Amino-4-(4-chlorbenzoylamino)-anthrachinon,
1-Amino-4-(2.5-dichlorbenzoylamino)-anthrachinon,
1 Amino-4-(3nitrobenzoylamino)-anthrachinon, 1-Amino-8-(2chtorbenzoylamino)-anthrachinon,
1-Amino-8-(3-chlorbenzoylamino) anthrachinon, 1 Amino-8-(4chlorbenzoylamino)-anthrachinon,
1 Amino-8-(2.5-dichlorbenzoylamino)-anthrachinon,
1-Amino-8-(3-nitrobenzoylamino)-anthrachinon,
1-Amino-2-methyl-4-benzoylamino-anthrachinon, 1-Amino-4-hydroxyanthrachinon,
1-Amino-5-hydroxyanthrachinon, 1-Amino-4-methoxyanthrachinon,
1-Amino-2-methoxy-4-hydroxyanthrachinon,1-Amino-4-methylaminoanthrachinon,
1-Amino-4-cyclohexylaminoanthrachinon. 1-Amino-4-anilinoanthrachinon,
1-Amino-6-methylmercaptoanthrachinon, 1.5-Diaminoanthrachinon, 1.8-Diaminoanthrachinon,
1.4-Diaminoanthrachinon, 1.5-Diamino-4.8-dihydroxyanthrachinon,
1.8-Diamino-4.5-dihydroxyanthrachinon, 2-Phenyl-6-amino-4.5-phthaloylbenzimidazol,
6-Chlor-2-amino-3.4-phthaloylacridon, 7-Chlor-2-amino-3.4-phthaloylacridon,
5-Chlor-8-amino-3.4-phthaloylacridon, 3-Methyl-6-amino-anthrapyridon,
3-Methyl-7-amino-anthrapyridon, 4-Amino-1.9-pyrazolanthron, 5-Amino-1.9-pyrazolanthron,
4-Amino-1.9-anthrapyrimidin, 5-Amino-1.9-anthrapyrimidin und 5-Aminoisothiazolanthron.

Bevorzugte Anthrachinonazo-Verbindungen entsprechen der Formel 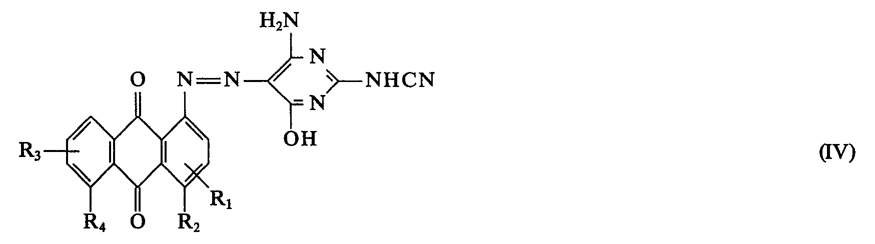 worin
R₁ Wasserstoff, Halogen wie Fluor, Chlor oder Brom, Nitro, C₁―C₄-Atky), C₁―C₄-Atkoxy, C₁―C₄-Alkylamino, Benzylamino, Cyclohexylamino, C₁-C₄-Alkylmercapto, gegebenenfalls durch Cᵢ-C₄-Alkyl, Cᵢ-C₄-Alkoxy, Fluor, Chlor, Brom oder Nitro substituiertes Phenylmercapto, (C₁-C₄-Alkyl)-carbonyl, (C₁―C₄-Alkoxy)-carbonyl, gegebenenfalls durch C₁―C₄-Alkyl, C₁-C₄-Alkoxy, Chlor oder Nitro substituiertes Phenylamino, gegebenenfalls durch C₁-C₄-Alkyl, Benzyl oder Phenyl mono- oder disubstituiertes Carbamoyl, wobei Phenyl durch C₁-C₄-Alkyl, C₁-C₄-Alkoxy, Fluor, Chlor, Brom, Nitro oder Carbamoyl substituiert sein kann, Carboxy, Hydroxy, (C₁-C₄-Alkyl)-carbonylamino, gegebenenfalls durch C₁―C₄-Alkyl, C₁―C₄-Alkoxy, Fluor, Chlor, Brom oder Nitro substituiertes Benzoylamino, gegebenenfalls durch C₁―C₄-Alkyl, C₁―C₄-Alkoxy, Fluor, Chlor, Brom oder Nitro substituiertes Benzolsulfonylamino oder einen Rest der Formel 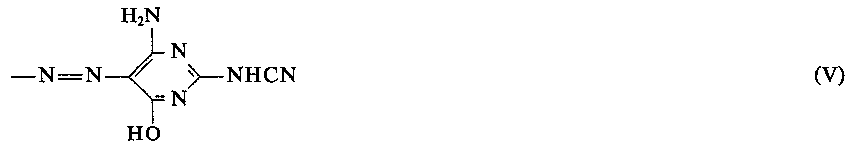
R₂ Wasserstoff, C₁―C₄-Alkyl, insbesondere Methyl, Halogen wie Fluor, Chlor oder Brom oderHydroxy,
R₃ Wasserstoff, Halogen wie Fluor, Chlor oder Brom, Nitro, C₁-C₄-Alkyl, C₁―C₄-Alkoxy, C₁―C₄-Alkylamino, C₁―C₄-Alkylmercapto, gegebenenfalls durch C₁―C₄-Alkyl, C₁―C₄-Alkoxy, Fluor, Chlor, Brom oder Nitro substituiertes Phenylmercapto, (C₁―C₄-Alkoxy)-carbonyl, (C₁―C₄-Alkyl)-carbonyl, Benzylamino, Cyclohexylamino, gegebenenfalls durch C₁―C₄-Alkyl, C₁―C₄-Alkoxy, Chlor, Brom oder Nitro substituiertes Phenylamino, Carboxy, Hydroxy, gegebenenfalls durch C₁―C₄-Alkyl, Benzyl oder Phenyl mono- oder disubstituiertes Carbamoyl, wobei Phenyl durch C₁―C₄-Alkyl, Cₗ-C₄-Alkoxy, Fluor, Chlor, Brom oder Nitro substituiert sein kann, (C₁―C₄-Alkyl)-carbonylamino, gegebenenfalls durch C₁―C₄-Alkyl, C₁―C₄-Alkoxy, Fluor, Chlor, Brom oder Nitro substituiertes Benzoylamino, C₁―C₄-Alkansulfonylamino, gegebenenfalls durch C₁―C₄-Alkyl, C₁―C₄-Alkoxy, Fluor, Chlor, Brom oder Nitro substituiertes Benzolsulfonylamino oder einen Rest der Formel 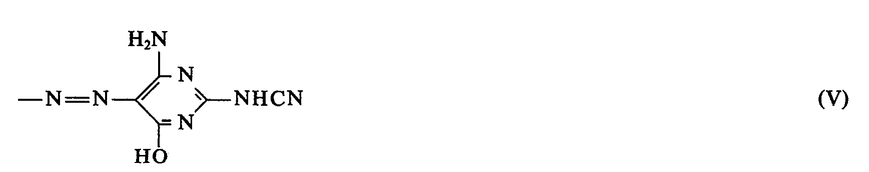 und
R₄ Wasserstoff, Halogen wie Fluor, Chlor oder Brom oder Hydroxy bedeuten.

Besonders bevorzugte Anthrachinonazo-Verbindungen entsprechen der Formel 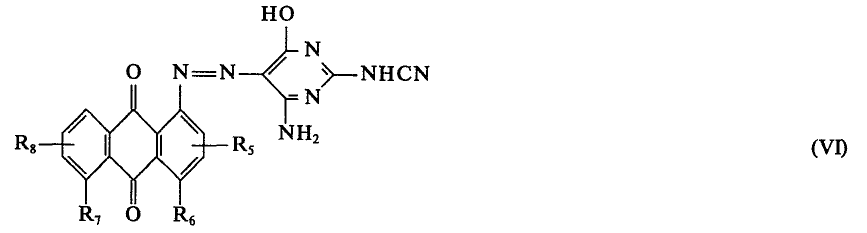 worin
Rₛ Wasserstoff, Methyl, Chlor, Brom, Nitro, Acetyl, (C₁―C₄-Alkoxy)-carbonyl, gegebenenfalls durch C₁―C₄-Alkyl oder Phenyl substituiertes Carbamoyl, wobei Phenyl durch C₁―C₄-Alkyl, C₁―C₄-Alkoxy, Chlor, Brom oder Nitro substituiert sein kann, Carboxy, (C₁―C₄-Alkyl)-carbonylamino oder gegebenenfalls durch C₁―C₄-Alkyl, C₁―C₄-Alkoxy, Chlor, Brom oder Nitro substituiertes Benzoylamino,
R₆ Wasserstoff, Methyl oder Hydroxy,
R₇ Wasserstoff, Chlor, Brom, Nitro, Hydroxy, (C₁―C₄-Alkyl)carbonylamino, gegebenenfalls durch C₁―C₄-Alkyl, C₁―C₄-Alkoxy, Chlor, Brom oder Nitro substituiertes Benzoylamino, Carboxy,(C₁―C₄-Alkoxy)carbonyl, gegebenenfalls durch C₁―C₄-Alkyl oder Phenyl substituiertes Carbamoyl, wobei Phenyl durch C₁―C₄-Alkyl, C₁―C₄-Alkoxy, Chlor, Brom oder Nitro weitersubstituiert sein kann oder einen Rest der Formel 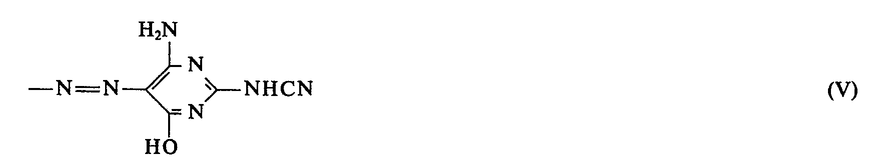 und
R_{B} Wasserstoff, Chlor, Hydroxy oder Nitro bedeuten.

Ganz besonders bevorzugte Anthrachinonazo-Verbindungen entsprechen der Formel 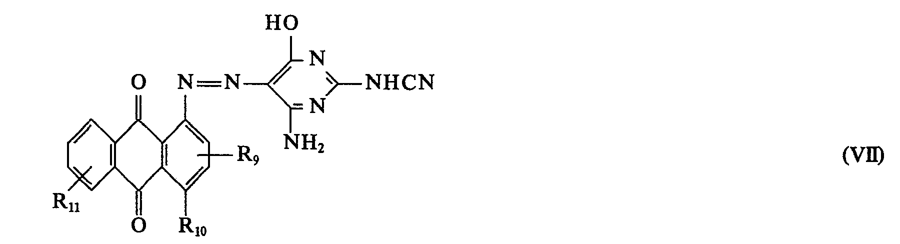 worin
Rg Wasserstoff, Hydroxy oder gegebenenfalls durch Chlor oder Nitro substituiertes Benzoylamino,
R₁₀ Wasserstoff oder Methyl und
R₁₁ Wasserstoff, Chlor, gegebenenfalls durch Chlor Nitro substituiertes Benzoylamino oder einen Rest der Formel 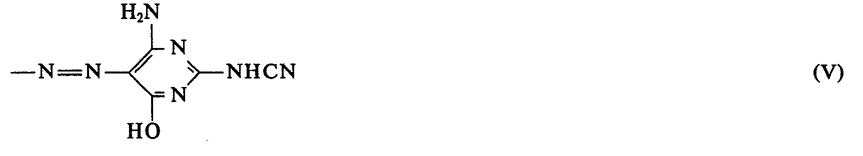 bedeuten.

Die Herstellung der Anthrachinonazo-Verbindungen der Formel (I) kann nach mehreren Verfahren erfolgen.
1. Man überführt das Aminoanthrachinon der Formel 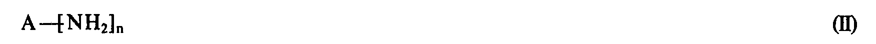 nach bekannten Verfahren in das Diazoniumsalz, z. B. mit Nitrosyl-Schwefelsäure oder durch Eintropfen der schwefelsauren Lösung in eine wäßrige Natriumnitrit-Lösung und setzt die erhaltene Suspension des Diazoniumsulfats bei 0° -90° C mit n Mol einer Kupplungskomponente der Formel 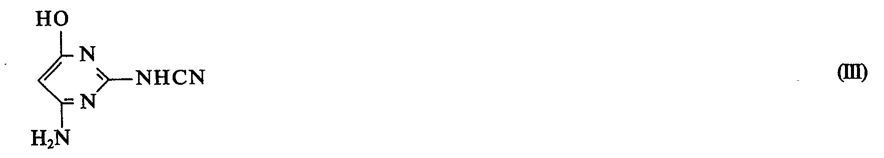 um.
2. In Abänderung dieses Verfahrens kann man nach der Diazotierung das Diazoniumsalz aus der wäßrigen Suspension durch Filtration isolieren und in Wasser oder in einem organischen Lösungsmittel durch Zusatz einer anorganischen oder organischen Säure mit einer Kupplungskomponente der Formel (111) zum Azopigment umsetzen. Zur Reinigung des Farbstoffs schließt sich gegebenenfalls eine Temperung bei 60° -200°C in demselben oder einem anderen organischen Lösungsmittel an. Als organische Lösungsmittel für die Kupplungsreaktion eignen sich Alkohole wie Methanol, Ethanol oder Glykolmonomethylether, Aromaten wie Toluol, 1,2-Dichlorbenzol, Nitrobenzol oder Pyridin und dipolar aprotische Lösungsmittel wie Dimethylformamid, N-Methylpyrrolidon, Dimethylsulfoxid oder Tetramethylensulfon. Geeignete Säuren zur Katalyse der Kupplungsreaktionen sind z. B. anorganische Säuren wie Schwefelsäure, Phosphorsäure oder Salzsäure, organische Carbonsäure wie Ameisensäure, Essigsäure, Chloressigsäure, Oxalsäure, Maleinsäure, 2.4-Dichlorbenzoesäure oder Terephthalsäure, p-Toluolsulfonsäure oder Naphthalin-2.6-disulfonsäure.
3. Man löst oder suspendiert das Aminoanthrachinon der Formel (11) in einem organischen Lösungsmittel und diazotiert nach Zusatz einer anorganischen oder organischen Säure mit einem organischen Nitrit wie Methylnitrit oder Amylnitrit oder mit Natriumnitrit, das als wäßrige Lösung oder auch kristallin eingesetzt werden kann. Anschließend kuppelt man ohne Isolierung auf eine Kupplungskomponente der Formel (111).

Zweckmäßigerweise schließt sich auch hier eine Temperung des erhaltenen Pigmentes an.

Die für diese Verfahren geeigneten organischen Lösungsmittel und anorganischen bzw. organischen Säuren entsprechen den bei Verfahren 2 genannten Verbindungen.

4. Ein weiteres Herstellungsverfahren für die Anthrachinonazo-Verbindungen der Formel (I) besteht darin, daß man nach der Darstellung der Kupplungskomponente (111) auf deren Isolation und Reinigung verzichtet und statt dessen direkt mit dem Diazoniumsalz eines Aminoanthrachinons der Formel (11) zum Azopigment umsetzt.

Die Kupplungskomponenten der Formel (111) sind bekannt. Ein Verfahren zu ihrer Herstellung ist z. B. in der DE-C 158 519 (Friedländer 7, 663) beschrieben.

Die Verbindungen der Formel (1) fallen in einer für die Pigmentanwendung geeigneten Form an oder können durch an sich bekannte Nachbehandlungsverfahren in die geeignete Form überführt werden, z. B. durch Lösen oder Quellen in starken anorganischen Säuren wie Schwefelsäure und Austragen auf Eis. Die Feinverteilung kann auch durch Mahlen mit oder ohne Mahlhilfsstoffen wie anorganischen Salzen oder Sand, gegebenenfalls in Anwesenheit von Lösungsmitteln, wie Toluol, Xylol, Dichlorbenzol oder N-Methylpyrrolidon erzielt werden. Farbstärke und Transparenz des Pigmentes können durch Variation der Nachbehandlung beeinflußt werden.

Die Farbstoffe der Formel (I) eignen sich aufgrund ihrer Licht- und Migrationsechtheit für die verschiedensten Pigmentapplikationen. So können sie zur Herstellung von sehr echt pigmentierten Systemen, wie Mischungen mit anderen Stoffen, Zubereitungen, Anstrichmitteln, Druckfarben, gefärbtem Papier und gefärbten makromolekularen Stoffen verwendet werden. Unter Mischung mit anderen Stoffen können z. B. solche mit anorganischen Weißpigmenten wie Titandioxid (Rutil) oder mit Zement verstanden werden. Zubereitungen sind z. B. Flushpasten mit organischen Flüssigkeiten oder Teige und Feinteige mit Wasser, Dispergiermitteln und gegebenenfalls Konservierungsmitteln. Die Bezeichnung Anstrichmittel steht z. B. für physikalisch oder oxidativ trocknende Lacke, Einbrennlacke, Reaktionslacke, Zweikomponentenlacke, Dispersionsfarben für wetterfeste Überzüge und Leimfarben. Unter Druckfarben sind solche für den Papier-, Textil- und Blechdruck zu verstehen. Die makromolekularen Stoffe können natürlichen Ursprungs sein wie Kautschuk, durch chemische Modifikation erhalten werden wie Acetylcellulose, Cellulosebutyrat oder Viskose oder synthetisch erzeugt werden wie Polymerisate, Polyadditionsprodukte und Polykondensate. Genannt seien plastische Massen wie Polyvinylchlorid, Polyvinylacetat, Polyvinylpropionat, Polyolefine z. B. Polyethylen oder Polyamide, Superpolyamide, Polymerisate und Mischpolymerisate aus Acrylester, Methacrylestern, Acrylnitril, Acrylamid, Butadien, Styrol sowie Polyurethane und Polycarbonate. Die mit den beanspruchten Produkten pigmentierten Stoffe können in beliebiger Form vorliegen.

### Beispiel 1

a) In einem Gemisch aus 55 g Schwefelsäure (96%) und 22 g Nitrosylschwefelsäure (40%) werden 14 g 1-Aminoanthrachinon 3 Stunden bei Raumtemperatur verrührt. Anschließend verdünnt man mit 200 g Wasser und zerstört überschüssiges Nitrit mit Amidosulfonsäure. Bei Raumtemperatur tropft man dann eine alkalische Lösung von 9,6 g 2-Cyanimino-4-amino-6-hydroxypyrimidin in 150 g Wasser zu, rührt 3 Stunden nach und saugt ab. Nach Waschen mit Wasser und Trocknen verbleiben 23,7 g (98% d. Th.) des gelben Pigmentes der Formel

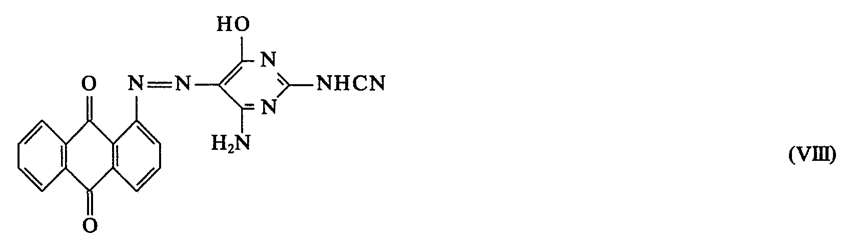

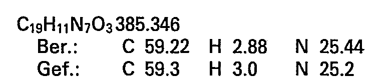

b) In 300 ml Dimethylformamid werden 10 g Schwefelsäure (96%) und 14 g 1-Aminoanthrachinon bei Raumtemperatur gelöst. Man tropft eine Lösung von 7,5 g Amylnitrit in 20 ml Dimethylformamid ein, rührt 3 Stunden nach, setzt 9,6 g 2-Cyanimino-4-amino-6-hydroxypyrimidin zu und rührt ca. 5 Stunden bei Raumtemperatur, bis sich kein Diazoniumsalz mehr nachweisen läßt. Dann saugt man ab, wäscht mit Dimethylformamid und Methanol nach und erhält nach dem Trocknen 22 g (91%) des in Beispiel 1a genannten Gelbpigmentes.

Mit ähnlichen Ausbeuten und in gleicher Qualität erhält man das in Beispiel 1a genannte Gelbpigment, wenn man bei dem in Beispiel 1b genannten Verfahren anstelle von Schwefelsäure Essigsäure oder Chloressigsäure und anstelle von Dimethylformamid Toluol, 1.2-Dichlorbenzol oder Nitrobenzol verwendet.

### Beispiel 2

Eine Lösung von 22 g 1-Amino-5-benzoylaminoanthrachinon (90%ig) in 60 ml Schwefelsäure (96%) tropft man in eine Lösung von 6 g Natriumnitrit in 300 g Eiswasser. Nach 2 Stunden tropft man eine alkalische Lösung von 9 g 2-Cyanimino-4-amino-6-hydroxypyrimidin in 150 ml Wasser zu, rührt 3 Stunden bei Raumtemperatur nach und saugt ab. Nach Waschen und Trocknen werden 28 g (96%) des Gelbpigmentes der Formel 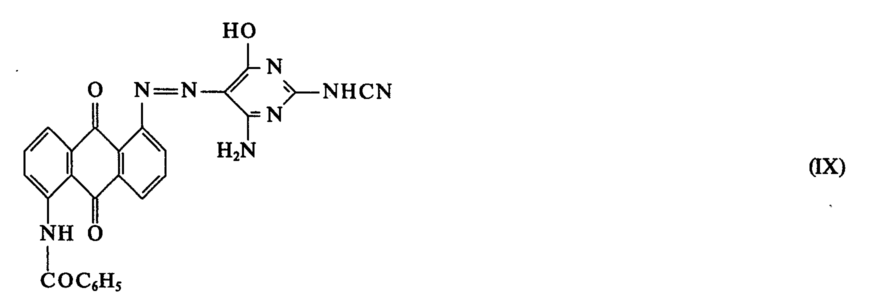 erhalten.

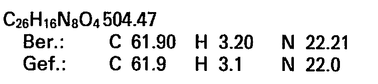

Nach dem in Beispiel 2 genannten Verfahren erhält man bei Verwendung der in der folgenden Tabelle aufgeführten Aminoanthrachinone anstelle von 1-Amino-5-benzoylaminoanthrachinon Azopigmente mit den angegebenen Farbtönen.

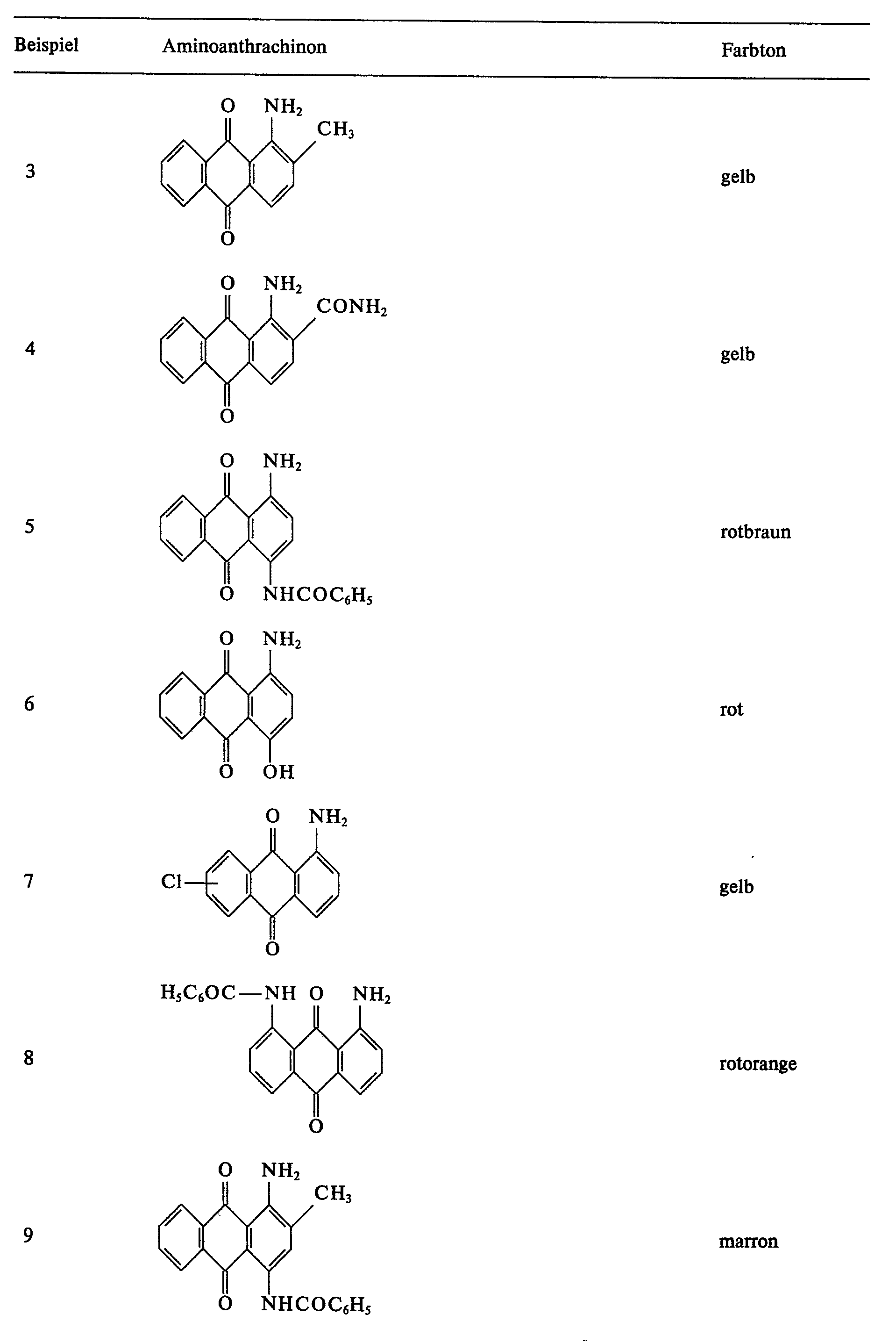

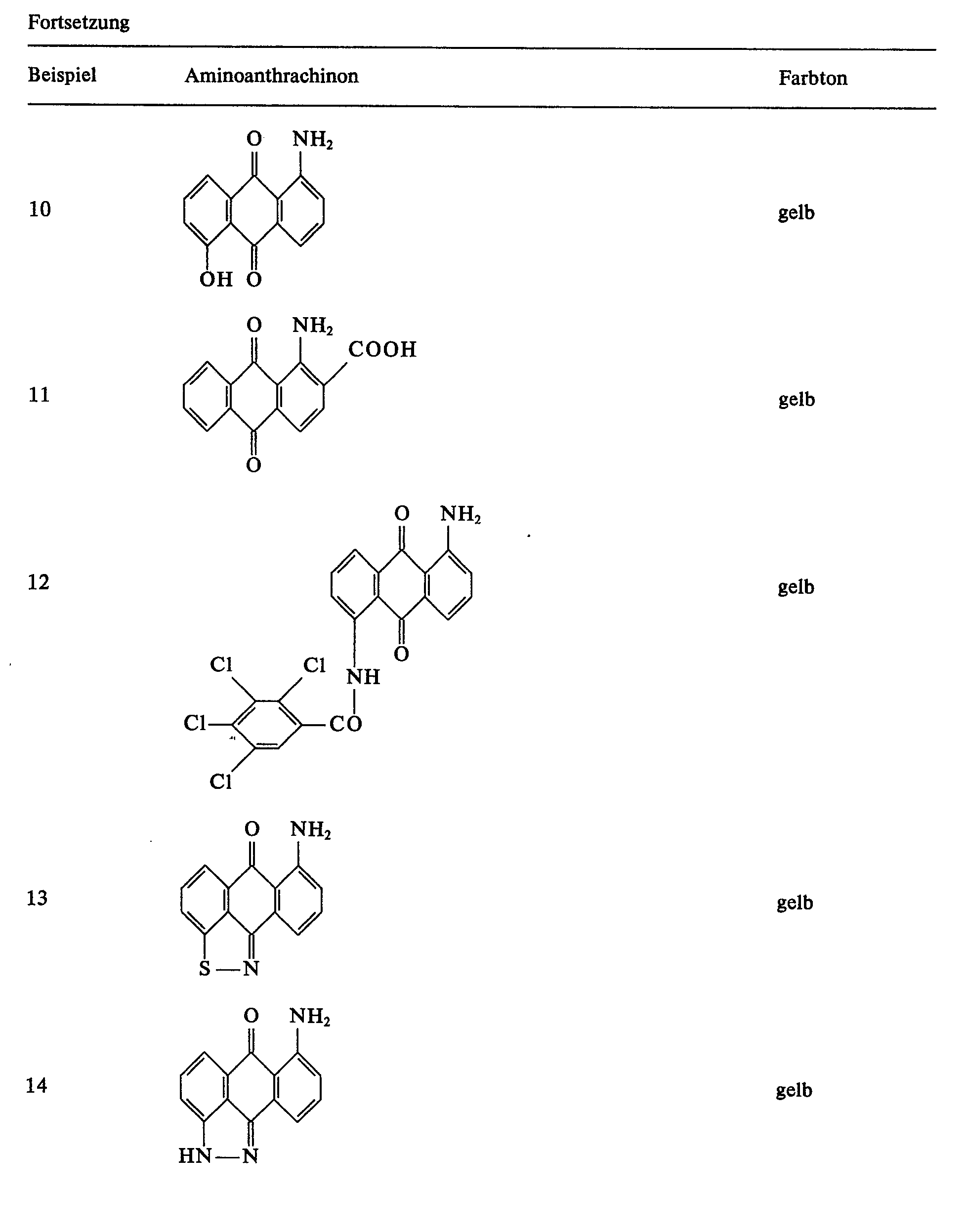

### Beispiel 15

12 g 1.5-Diaminoanthrachinon werden bei Raumtemperatur in einem Gemisch von 100 gEisessig und 30 g konz. Salzsäure mit einer Lösung von 8 g Natriumnitrit in 16 g Wasser diazotiert. Man rührt 2 Stunden nach, verdünnt mit 500 g Wasser, filtriert bei 50° vom Ungelösten ab und setzt zum Filtrat eine alkalische Lösung von 16 g 2-Cyanimino-4-amino-6-hydroxypyrimidin in 200 ml Wasser tropfenweise zu. Nach 2 Stunden bei 50° wird abgesaugt, mit Wasser gewaschen und getrocknet. Man erhält 25 g (88%) des orangefarbenen Pigmentes der Formel

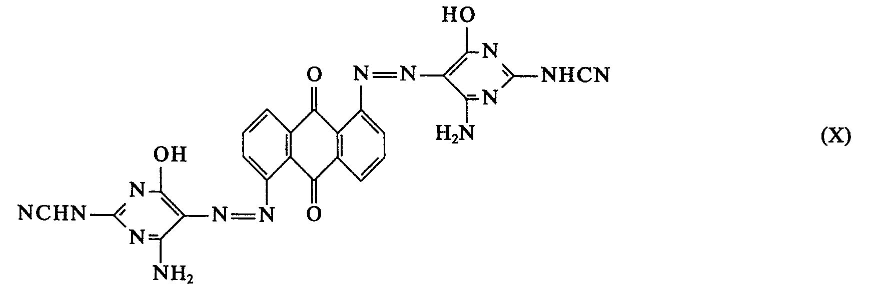

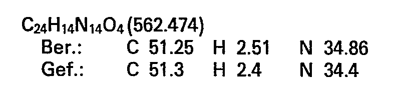

### Beispiel 16

Nach dem in Beispiel 15 genannten Verfahren erhält man bei Verwendung von 1.8-Diaminoanthrachinon anstelle von 1.5-Diaminoanthrachinon in ähnlicher Ausbeute ein Rotpigment der Formel

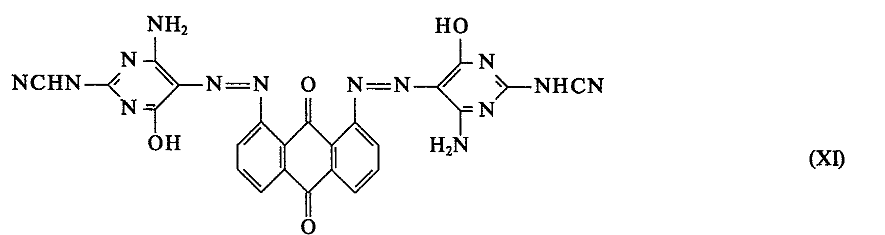

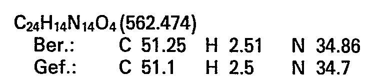

### Beispiel 17 (Anwendungsbeispiel)

8 g feingemahlenes Pigment gemäß Beispiel 1a werden in 92 g eines Einbrennlackes folgender Zusammensetzung dispergiert:
33% Alkydharz
15% Melaminharz
5% Glykolmonomethylether
34% Xylol
13% Butanol

Als Alkydharze kommen Produkte auf Basis synthetischer und pflanzlicher Fettsäuren wie Kokosöl, Rizinusöl, Rizinenöl, Leinöl u. a. in Frage. Anstelle von Melaminharzen können Harnstoffharze verwendet werden.

Nach erfolgter Dispergierung wird der pigmentierte Lack auf Papier-, Glas-, Kunststoff- oder MetallFolien aufgetragen und 30 Min. bei 130" C eingebrannt. Die Lackierungen besitzen sehr gute Licht- und Wetterbeständigkeit sowie gute Überlackierechtheit.

### Beispiel 18 (Anwendungsbeispiel)

0,2 g Pigment nach Beispiel 1a werden mit 100 g Polyethylen-, Polypropylen- oder Polystyrolgranulat gemischt. Die Mischung kann entweder bei 220 bis 280° C direkt in einer Spritzgußmaschine verspritzt, oder in einer Strangpresse zu gefärbten Stäben bzw. auf dem Mischwalzwerk zu gefärbten Fellen verarbeitet werden. Die Stäbe bzw. Felle werden gegebenenfalls granuliert und in einer Spritzgußmaschine verspritzt.

Die gelben Formlinge besitzen sehr gute Licht- und Migrationsechtheit. In ähnlicher Weise können bei 280-300° C, gegebenenfalls unter Stickstoffatmosphäre, synthetische Polyamide aus Caprolactam oder Adipinsäure und Hexamethylendiamin oder die Kondensate aus Terephthalsäure und Ethylenglykol gefärbt werden.

### Beispiel 19 (Anwendungsbeispiel)

Mit einer Druckfarbe, hergestellt durch Anreiben von 35 g Pigment nach Beispiel 1a und 65 g Leinöl und Zugabe von 1 g Siccativ (Co-Naphthenat, 50%ig in Testbenzin) werden gelbe Offset-Drucke hoher Brillanz und Farbstärke und sehr guter Licht- und Lackierechtheiten erhalten. Verwendung dieser Druckfarbe in Buch-, Licht-, Stein- oder Stahlstichdruck führt zu gelben Drucken ähnlicher Echtheiten. Verwendet man das Pigment zur Färbung von Blechdruck- oder niedrigviskosen Tiefdruckfarben oder Drucktinten, erhält man gelbe Drucke ähnlicher Echtheiten.

## Patentansprüche

1. Anthrachinonazoverbindungen, die in einer ihrer tautomeren Strukturen der Formel 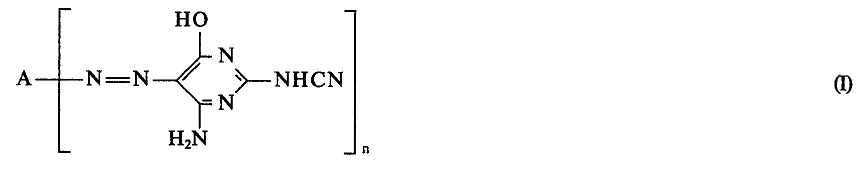 entsprechen, worin
A einen von Sulfonsäuregruppen freien, gegebenenfalls substituierten Anthrachinonrest oder einen von Sulfonsäuregruppen freien, gegebenenfalls substituierten heterocyclischen Anthrachinonrest, der vorzugsweise aus höchstens 5 kondensierten Ringen besteht und
n 1 oder 2
bedeuten.

2. Anthrachinonazoverbindungen gemäß Anspruch 1, dadurch gekennzeichnet, daß A einen Anthrachinon-, Anthrapyridon-, Anthrapyrimidin-, Pyrazolanthron-, Phthaloylacridon-, Phthaloylbenzimidazol- oder Isothiazolanthron-Rest bezeichnet, wobei die genannten Reste substituiert sein können.

3. Anthrachinonazopigmente der Formel 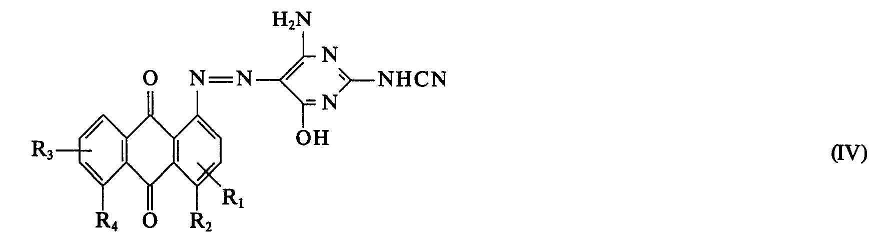 in der
R₁ Wasserstoff, Halogen wie Fluor, Chlor oder Brom, Nitro, C₁-C₄-Alkyl, C₁-C₄-Alkoxy, C₁―C₄-Alkylamino, Benzylamino, Cyclohexylamino, Cₗ-C₄-Alkylmercapto, gegebenenfalls durch C₁―C₄-Alkyl, C₁-C₄-Alkoxy, Fluor, Chlor, Brom oder Nitro substituiertes Phenylmercapto, (C₁-C₄-Alkyl)-carbonyl, (C₁―C₄-Alkoxy)-carbonyl, gegebenenfalls durch C₁―C₄-Alkyl, C₁―C₄-Alkoxy, Chlor oder Nitro substituiertes Phenylamino, gegebenenfalls durch C₁―C₄-Alkyl, Benzyl oder Phenyl mono- oder disubstituiertes Carbamoyl, wobei Phenyl durch Cᵢ-C₄-Alkyl, C₁―C₄-Alkoxy, Fluor, Chlor, Brom, Nitro oder Carbamoyl substituiert sein kann, Carboxy, Hydroxy, (C₁―C₄-Alkyl)-carbonylamino, gegebenenfalls durch C₁-C₄-Alkyl, C₁―C₄-Alkoxy, Fluor, Chlor, Brom oder Nitro substituiertes Benzoylamino, gegebenenfalls durch C₁―C₄-Alkyl, C₁―C₄-Alkoxy, Fluor, Chlor, Brom oder Nitro substituiertes Benzolsulfonylamino oder einen Rest der Formel 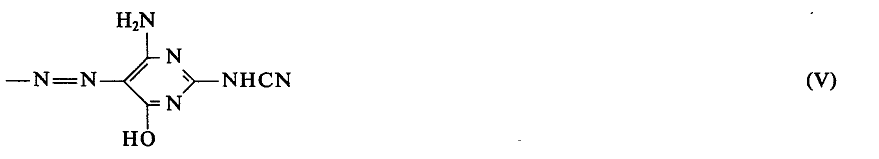
R₂ Wasserstoff, C₁―C₄-Alkyl, insbesondere Methyl, Halogen wie Fluor, Chlor oder Brom oder Hydroxy,
R₃ Wasserstoff, Halogen wie Fluor, Chlor oder Brom, Nitro, C₁―C₄-Alkyl, C₁―C₄-Alkoxy, C₁―C₄-Alkylamino, C₁―C₄-Alkylmercapto, gegebenenfalls durch C₁-C₄-Alkyl, C₁-C₄-Alkoxy, Fluor, Chlor, Brom oder Nitro substituiertes Phenylmercapto, (C₁―C₄-Alkoxy)-carbonyl, (C₁―C₄-Alkyl)-carbonyl, Benzylamino, Cyclohexylamino, gegebenenfalls durch Cᵢ-C₄-Alkyl, Cᵢ-C₄-Alkoxy, Chlor, Brom oder Nitro substituiertes Phenylamino, Carboxy, Hydroxy, gegebenenfalls durch C₁―C₄-Alkyl, Benzyl oder Phenyl mono- oder disubstituiertes Carbamoyl, wobei Phenyl durch C₁―C₄-Alkyl, C₁―C₄-Alkoxy, Fluor, Chlor, Brom oder Nitro substituiert sein kann, (C₁-C₄-Alkyl)-carbonylamino, gegebenenfalls durch C₁-C₄-Alkyl, C₁-C₄-Alkoxy, Fluor, Chlor, Brom oder Nitro substituiertes Benzoylamino, C₁―C₄-Alkansulfonylamino, gegebenenfalls durch C₁-C₄-Alkyl, C₁―C₄-Alkoxy, Fluor, Chlor, Brom oder Nitro substituiertes Benzolsulfonylamino oder einen Rest der Formel 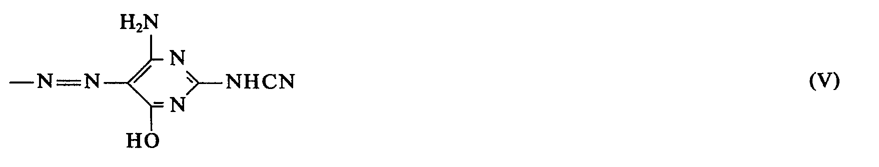 und
R₄ Wasserstoff, Halogen wie Fluor, Chlor oder Brom oder Hydroxy bedeuten.

4. Anthrachinonazopigmente der Formel 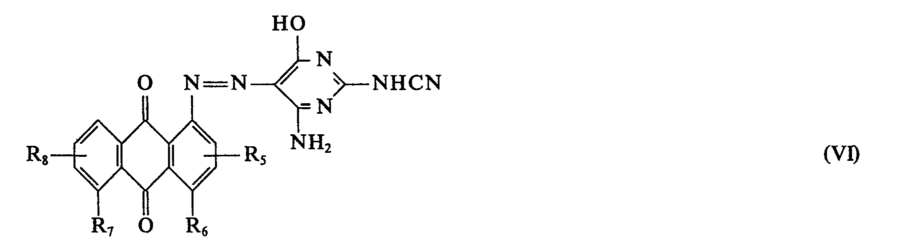 in der
R₅ Wasserstoff, Methyl, Chlor, Brom, Nitro, Acetyl, (C₁―C₄-Alkoxy)-carbonyl, gegebenenfalls durch C₁―C₄-Alkyl oder Phenyl substituiertes Carbamoyl, wobei Phenyl durch C₁―C₄-Alkyl, C₁―C₄-Alkoxy, Chlor, Brom oder Nitro substituiert sein kann, Carboxy, (C₁―C₄-Alkyl)-carbonylamino oder gegebenenfalls durch C₁―C₄-Alkyl, C₁―C₄-Alkoxy, Chlor, Brom oder Nitro substituiertes Benzoylamino,
R₆ Wasserstoff, Methyl oder Hydroxy,
R₇ Wasserstoff, Chlor, Brom, Nitro, Hydroxy, (C₁―C₄-Alkyl)carbonyl -amino, gegebenenfalls durch Cᵢ-C₄-Alkyl, Cᵢ-C₄-Alkoxy, Chlor, Brom oder Nitro substituiertes Benzoylamino, Carboxy, (C₁―C₄-Alkoxy)carbonyl, gegebenenfalls durch C₁-C₄-Alkyl oder Phenyl substituiertes Carbamoyl, wobei Phenyl durch C₁―C₄-Alkyl, C₁―C₄-Alkoxy, Chlor, Brom oder Nitro weitersubstituiert sein kann oder einen Rest der Formel 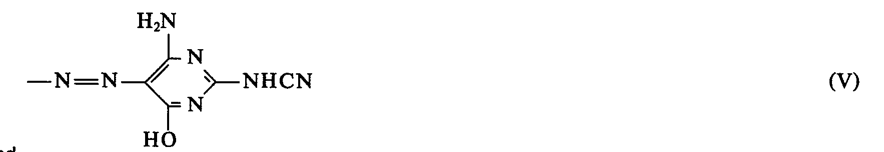 und
R₈ Wasserstoff, Chlor, Hydroxy oder Nitro bedeuten.

5. Anthrachinonazopigmente der Formel 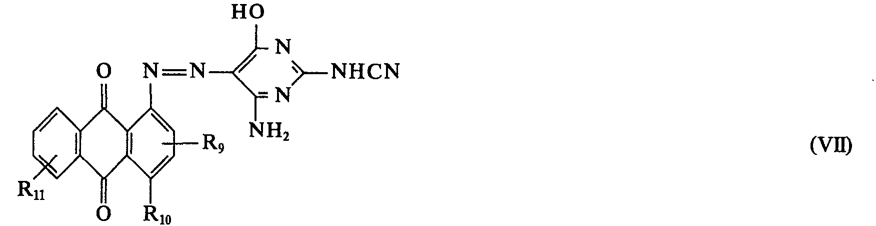 in der
R₉ Wasserstoff, Hydroxy oder gegebenenfalls durch Chlor oder Nitro substituiertes Benzoylamino,
Rio Wasserstoff oder Methyl und
R₁₁ Wasserstoff, Chlor oder gegebenenfalls durch Chlor oder Nitro substituiertes Benzoylamino oder einen Rest der Formel 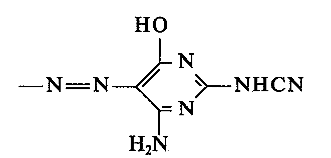 bedeuten.

6. Anthrachinonazopigment der Formel

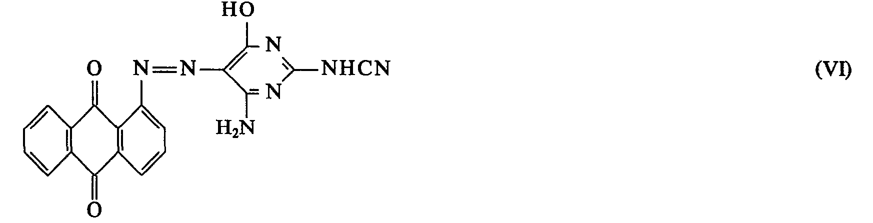

7. Verfahren zur Herstellung von Anthrachinonazo-Verbindungen der Formel (I), dadurch gekennzeichnet, daß man Aminoanthrachinone der Formel 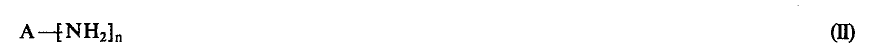 in der A und n die obengenannte Bedeutung haben, diazotiert und mit n Mol Kupplungskomponente der Formel 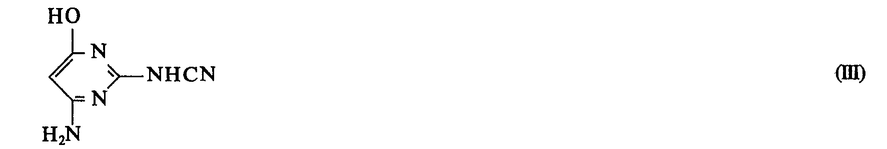 umsetzt.

8. Verfahren zum Pigmentieren organischer makromolekularer Stoffe, dadurch gekennzeichnet, daß man Anthrachinonazo-Verbindungen gemäß den Ansprüchen 1 bis 6 verwendet.

## Claims

1. Anthraquinone-azo compounds, which in one of their tautomeric structures correspond to the formula 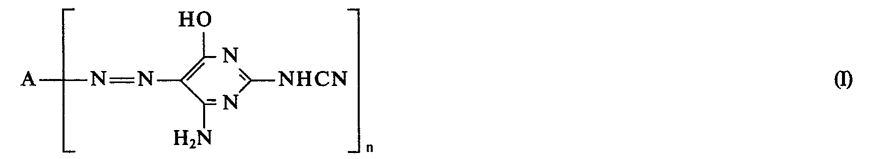 wherein
A denotes an optionally substituted anthraquinone radical which is free of sulphonic acid groups or an optionally substituted heterocyclic anthraquinone radical which preferably consists of at most 5 fused rings and is free of sulphonic acid groups, and
n denotes 1 or 2.

2. Anthraquinone-azo compounds according to Claim 1, characterised in that A denotes an anthraquinone, anthrapyridone, anthrapyrimidine, pyrazoloanthrone, phthaloylacridone, phthaloylbenzimida- zole or isothiazoloanthrone radical, it being possible for the radicals mentioned to be substituted.

3. Anthraquinone-azo pigments of the formula 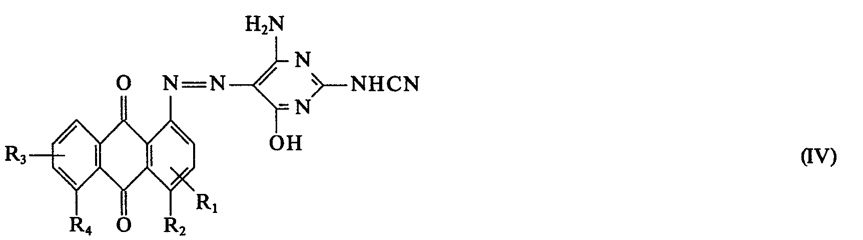 in which
R₁ denotes hydrogen, halogen, such as fluorine, chlorine or bromine, nitro, C₁-C₄-alkyl, C₁―C₄-alkoxy, C₁―C₄-alkylamino, benzylamino, cyclohexylamino, C₁-C₄-alkylmercapto, phenylmercapto which may be substituted by C₁―C₄-alkyl, C₁-C4-alkoxy, fluorine, chlorine, bromine or nitro, (C₁―C₄-alkyl)-carbonyl, (C₁―C₄-alkoxy)-carbonyl, phenylamino which may be substituted by C₁―C₄-alkyl, C₁―C₄-alkoxy, chlorine or nitro, carbamoyl which may be monosubstituted or disubstituted by C₁―C₄-alkyl, benzyl or phenyl, it being possible for phenyl to be substituted by C₁―C₄-alkyl, C₁―C₄-alkoxy, fluorine, chlorine, bromine, nitro or carbamoyl, carboxyl, hydroxyl, (C₁-C₄-alkyl)-carbonylamino, benzoylamino which may be substituted by C₁―C₄-alkyl, C₁―C₄-alkoxy, fluorine, chlorine, bromine or nitro, benzenesulphonylamino which may be substituted by C₁-C₄-alkyl, C₁-C₄-alkoxy, fluorine, chlorine, bromine or nitro or a radical of the formula 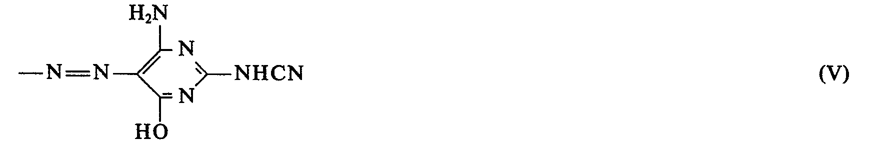
R₂ denotes hydrogen, C₁―C₄-alkyl, in particular methyl, halogen such as fluorine, chlorine or bromine, or hydroxyl,
R₃ denotes hydrogen, halogen, such as fluorine, chlorine or bromine, nitro, C₁―C₄-alkyl, C₁―C₄-alkoxy, C₁-C₄-alkylamino, C₁―C₄-alkylmercapto, phenylmercapto which may be substituted by C₁―C₄-alkyl, C₁―C₄-alkoxy, fluorine, chlorine, bromine or nitro, (C₁―C₄-alkoxy)-carbonyl, (C_{I}-C₄-alkyl)-carbonyl, benzylamino, cyclohexylamino, phenylamino which may be substituted by C₁-C₄-alkyl, C₁―C₄-alkoxy, chlorine, bromine or nitro, carboxyl, hydroxyl, carbamoyl which may be monosubstituted or disubstituted by C₁―C₄-alkyl, benzyl or phenyl, it being possible for phenyl to be substituted by C₁-C₄-alkyl, C₁―C₄-alkoxy, fluorine, chlorine, bromine or nitro, (C₁-C₄-alkyl)-carbonylamino, benzoylamino which may be substituted by C₁―C₄-alkyl, C₁―C₄-alkoxy, fluorine, chlorine, bromine or nitro, C₁―C₄-alkanesulphonylamino, benzenesulphonylamino which may be substituted by C₁-C₄-alkyl, C₁―C₄-alkoxy, fluorine, chlorine, bromine or nitro, or a radical of the formula 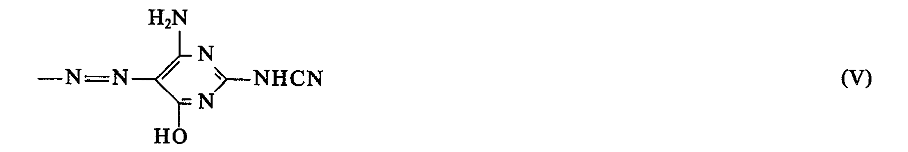 and
R₄ denotes hydrogen, halogen, such as fluorine, chlorine or bromine, or hydroxyl.

4. Anthraquinone-azo pigments of the formula 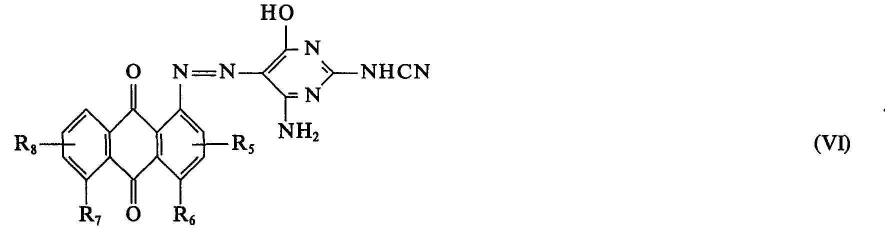 in which
R₅ denotes hydrogen, methyl, chlorine, bromine, nitro, acetyl, (C₁―C₄-alkoxy)-carbonyl, carbamoyl which may be substituted by C₁―C₄-alkyl or phenyl, it being possible for the phenyl to be substituted by C₁―C₄-alkyl, C₁―C₄-alkoxy, chlorine, bromine or nitro, carboxyl, (C₁―C₄-alkyl)-carbonylamino or benzoylamino which may be substituted by C₁―C₄-alkyl, C₁―C₄-alkoxy, chlorine, bromine or nitro,
R₆ denotes hydrogen, methyl or hydroxyl,
R₇ denotes hydrogen, chlorine, bromine, nitro, hydroxyl, (C₁―C₄-alkyl)-carbonylamino, benzoylamino which may be substituted by C₁―C₄-alkyl, C₁―C₄-alkoxy, chlorine, bromine or nitro, carboxyl, (C₁―C₄-alkoxy)-carbonyl, carbamoyl which may be substituted by C₁―C₄-alkyl or phenyl, it being possible for phenyl to be further substituted by C₁―C₄-alkyl, C₁―C₄-alkoxy, chlorine, bromine or nitro, or a radical of the formula 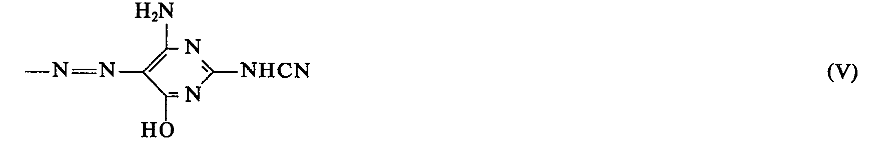 and
Rₐ denotes hydrogen, chlorine, hydroxyl or nitro.

5. Anthraquinone-azo pigments of the formula 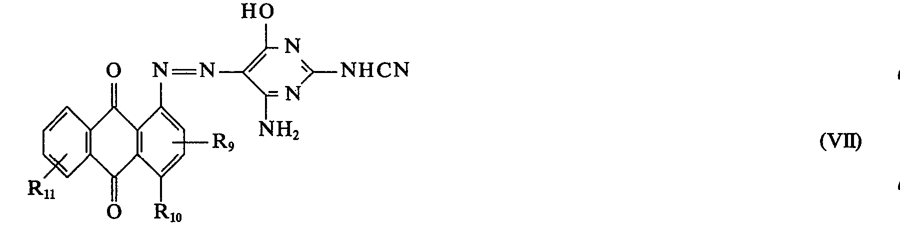 in which
R₉ denotes hydrogen, hydroxyl or benzoylamino which may be substituted by chlorine or nitro,
R₁₀ denotes hydrogen or methyl and
R₁₁ denotes hydrogen, chlorine, benzoylamino which may be substituted by chlorine or nitro, or a radical of the formula

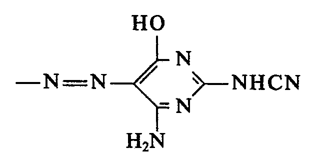

6. Anthraquinone-azo pigment of the formula

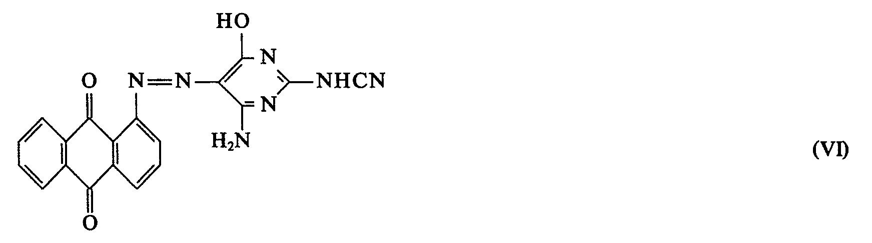

7. Process for the preparation of anthraquinone-azo compounds of the formula (I), characterised in that aminoanthraquinones of the formula 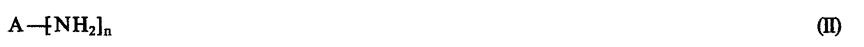 in which A and n have the abovementioned meaning, are diazotised and the product is reacted with n mols of a coupling component of the formula

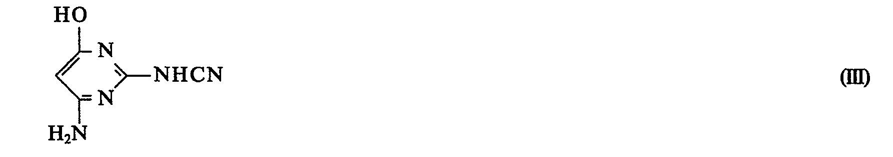

8. Process for pigmenting organic macromolecular substances, characterised in that anthraquinone-azo compounds according to Claims 1 to 6 are used.

## Revendications

1. Composés azoïques anthraquinoniques qui répondent sous l'une de leurs formes tautomères, à la formule 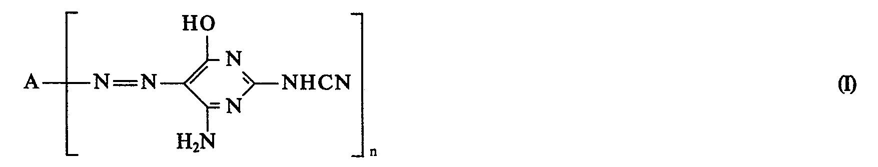 dans laquelle
A est un reste d'anthraquinone sans groupes acide sulfonique, éventuellement substitué ou un reste d'anthraquinone hétérocyclique sans groupes acide sulfonique, éventuellement substitué, qui est avantageusement formé d'un maximum de 5 noyaux condensés et
n est égal à 1 ou 2.

2. Composés azoïques anthraquinoniques suivant la revendication 1, caractérisés en ce que A désigne un reste d'anthraquinone, d'anthrapyridone, d'anthrapyrimidine, de pyrazolanthrone, de phtaloylacridone, de phtaloylbenzimidazole ou d'isothiazolanthrone, les restes mentionnés pouvant être substitués.

3. Pigments azoïques anthraquinoniques de formule 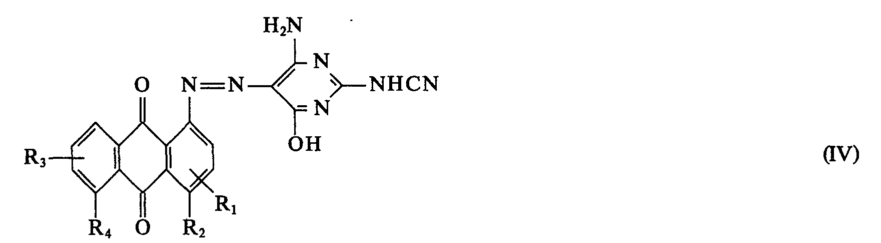 dans laquelle
R₁ représente l'hydrogène, un halogène tel que fluor, chlore ou brome, un groupe nitro, alkyle en C₁ à C₄, alkoxy en C₁ à C₄, alkylamino en C₁ à C₄, benzylamino, cyclohexylamino, alkylmercapto en Ci à C₄, phénylmercapto éventuellement substitué par un radical alkyle en C₁ à C₄, alkoxy en C₁ à C₄, fluoro, chloro, bromo ou nitro, (alkyle en C₁ à C₄)-carbonyle,(alkoxy en C₁ à C₄)-carbonyle, phényla- mino éventuellement substitué par un radical alkyle en C₁ à C₄, alkoxy en C₁ à C₄, chloro ou nitro, carbamoyle monosubstitué ou disubstitué, le cas échéant, par un radical alkyle en Ci à C₄, benzyle ou phényle, le radical phényle pouvant porter un substituant alkyle en C₁ à C₄, alkoxy en C₁ à C₄, fluoro, chloro, bromo, nitro ou carbamoyle, un groupe carboxy, hydroxy, (alkyle en Ci à C₄)-carbo- nylamino, benzoylamino éventuellement substitué par un radical alkyle en Ci à C₄, alkoxy en Ci à C₄, fluoro, chloro, bromo ou nitro, benzènesulfonylamino éventuellement substitué par un radical alkyle en C₁ à C₄, alkoxy en C₁ à C₄, fluoro, chloro, bromo ou nitro ou un reste de formule 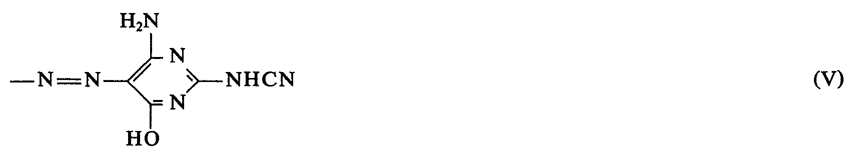
R₂ représente l'hydrogène, un groupe alkyle en C₁ à C₄, notamment méthyle, un halogène tel que fluor, chlore ou brome ou un groupe hydroxy,
R₃ représente l'hydrogène, un halogène tel que fluor, chlore ou brome, un groupe nitro, alkyle en Ci à C₄, alkoxy en C₁ à C₄, alkylamino en C₁ à C₄, alkylmercapto en C₁ à C₄, phénylmercapto éventuellement substitué par un radical alkyle en C₁―C₄, alkoxy en C₁ à C₄, fluoro, chloro, bromo ou nitro (alkoxy en C₁ à C₄)-carbonyle, (alkyle en C₁ à C₄)-carbonyle, benzylamino, cyclohexylamino, phény- lamino éventuellement substitué par un radical alkyle en C₁ à C₄, alkoxy en C₁ à C₄, chloro, bromo ou nitro, un groupe carboxy, hydroxy, carbamoyle éventuellement monosubstitué ou disubstitué par un radical alkyle en Ci à C₄, benzyle ou phényle, le radical phényle pouvant porter un substituant alkyle en C₁ à C₄, alkoxy en C₁ à C₄, fluoro, chloro, bromo ou nitro, un groupe (alkyle en C₁ à C₄)-carbonylamino, benzoylamino éventuellement substitué par un radical alkyle en C₁ à C₄, alkoxy en C₁ à C₄, fluoro, chloro, bromo ou nitro, un groupe (alcane en C₁ à C₄)-sulfonylamino, un groupe benzènesulfonylamino éventuellement substitué par un radical alkyle en C₁ à C₄, alkoxy en C₁ à C₄, fluoro, chloro, bromo ou nitro ou un reste de formule 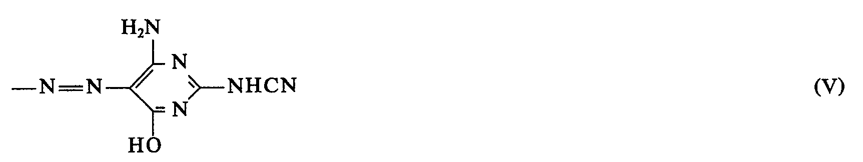 et
R₄ désigne l'hydrogène, un halogène tel que fluor, chlore ou brome ou un groupe hydroxy.

4. Pigments azoïques anthraquinoniques de formule 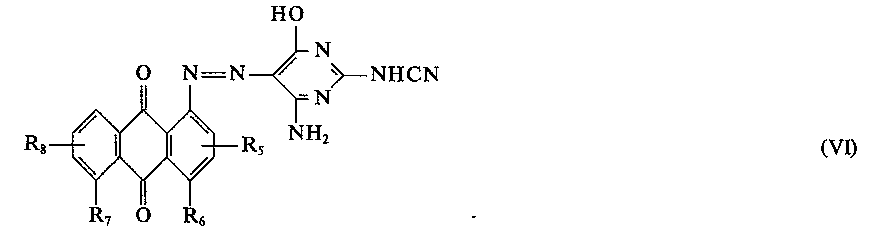 dans laquelle
Rs désigne l'hydrogène, un groupe méthyle, le chlore, le brome, un groupe nitro, acétyle, (alkoxy en Ci à C₄)-carbonyle, carbamoyle éventuellement substitué par un radical alkyle en Ci à C₄ ou phényle, le radical phényle pouvant porter un substituant alkyle en C₁ à C₄, alkoxy en C₁ à C₄, chloro, bromo ou nitro, carboxy, (alkyle en Ci à C₄)-carbonylamino ou benzoylamino éventuellement substitué par un radical alkyle en C₁ à C₄, alkoxy en C₁ à C₄, chloro, bromo ou nitro,
R₆ est l'hydrogène, un groupe méthyle ou un groupe hydroxy,
R₇ est l'hydrogène, le chlore, le brome, un groupe nitro, hydroxy, (alkyle en Ci à C₄)-carbonylamino, benzoylamino éventuellement substitué par un radical alkyle en C₁ à C₄, alkoxy en C₁ à C₄, chloro, bromo ou nitro, carboxy, (alkoxy en C₁ à C₄)-carbonyle, carbamoyle éventuellement substitué par un radical alkyle en C₁ à C₄ ou phényle, le radical phényle pouvant encore être substitué par un radical alkyle en C₁ à C₄, alkoxy en C₁ à C₄, chloro, bromo ou nitro, ou un reste de formule 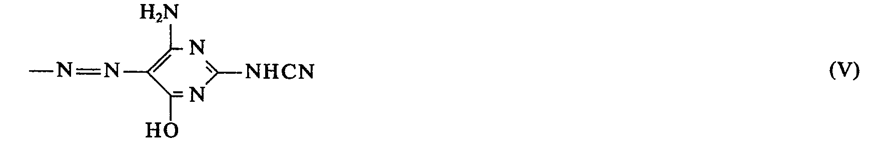 et
R₈ est l'hydrogène, le chlore, un groupe hydroxy ou un groupe nitro.

5. Pigments azoïques anthraquinoniques de formule 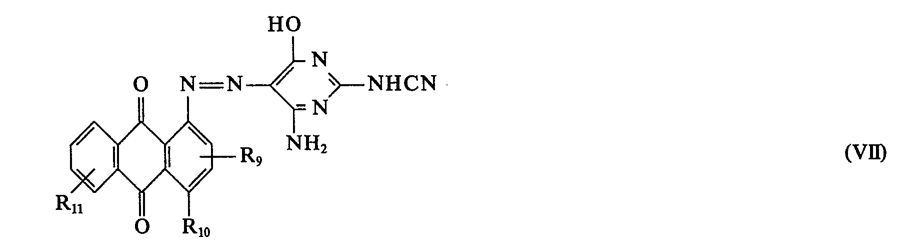 dans laquelle
R₉ désigne l'hydrogène, le groupe hydroxy ou un groupe benzoylamino éventuellement substitué par un radical chloro ou nitro,
R₁₀ est l'hydrogène ou le groupe méthyle et
R₁₁ est l'hydrogène, le chlore ou un groupe benzoylamino éventuellement substitué par un radical chloro ou nitro, ou un reste de formule

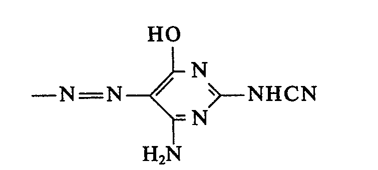

6. Pigments azoïques anthraquinoniques de formule

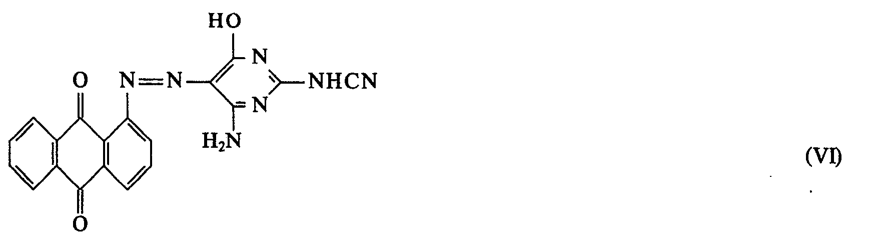

7. Procédé de production de composés azoïques anthraquinoniques de formule (1), caractérisé en ce qu'on diazote des amino-anthraquinones de formule 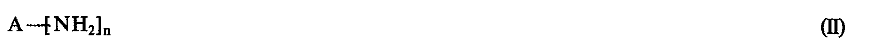 dans laquelle A et n ont la définition indiquée ci-dessus et on fait réagir le produit avec n moles de copulant de formule

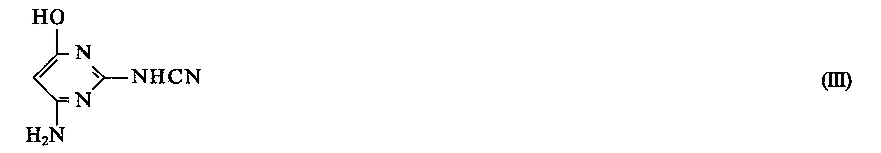

8. Procédé de pigmentation de substances organiques macromoléculaires, caractérisé en ce qu'on utilise des composés azoïques anthraquinoniques suivant les revendications 1 à 6.
